# EUROPEAN PATENT APPLICATION

(11) **EP 1 781 037 A2**
(43) Date of publication of application: **02.05.2007**
(21) Application number: 06021552.2
(22) Date of filing: 13.10.2006
(51) Int. Cl.: H04N 7/24

(54) **Terrestrial digital broadcasting system and method**

(30) Priority: 13.10.2005 KR 20050096612
(71) Applicant: Samsung Electronics Co., Ltd., Yeongtong-gu Suwon-si, Gyeonggi-do (KR)
(72) Inventor: Park, Young-Sik c/o Samsung Electronics Co., Ltd., Suwon-si, Gyeonggi-do (KR)
(74) Representative: Lang, Johannes

(57) **Abstract**

Provided is a terrestrial digital broadcasting system and method. The terrestrial digital broadcasting system includes a broadcasting station and a digital broadcasting receiver. The broadcasting station provides a digital broadcasting service, changes broadcasting configuration information according to user preference, and transmits digital broadcasting program guide data having changed broadcasting configuration information. The digital broadcasting receiver receives the digital broadcasting program guide data having changed broadcasting configuration information, searches for a broadcasting channel according to a change in the broadcasting configuration information, and receives and outputs digital broadcasting serviced on the found broadcasting channel. As a result, the terrestrial digital broadcasting system and method in which various contents are dynamically provided for each day according to user preferences is provided, thereby using a broadcasting channel efficiently having a limited frequency bandwidth.

## Description

### BACKGROUND OF THE INVENTION

### 1. Field of the Invention

The present invention generally relates to a terrestrial digital broadcasting system, and in particular, to a terrestrial digital broadcasting system and method, in which various contents are provided for every day of the week according to user preference.

### 2. Description of the Related Art

Generally, "digital broadcasting" refers to a broadcasting service, which uses digital data, rather than analog data, that provides users with higher quality images and sound in place of conventional analog broadcasting. Digital broadcasting is classified into satellite digital broadcasting and terrestrial digital broadcasting.

Satellite digital broadcasting provides mobile services and allows users to receive Multi-Media Broadcasting (MMB) and Digital Media Broadcasting (DMB) using portable receivers such as mobile phones and Personal Digital Assistants (PDAs) or vehicle receivers, anytime and anywhere.

Terrestrial digital broadcasting originating from Digital Audio Broadcasting (DAB) provides DMB for mobile receivers using an empty VHF channel (Channel 12), through which users can receive television broadcasting, radio broadcasting, and data broadcasting with multiple channels. While conventional terrestrial operators run a single analog channel, digital broadcasting operators run multiple digital channels referred to as ensembles.

In terrestrial digital broadcasting, an ensemble is divided into three blocks with two video channels for each block and three or four audio channels for each video channel are expected. Such terrestrial digital broadcasting will be used for vehicles and be available free of charge.

Interest in digital broadcasting services has increased recently with advances in digital broadcasting technology and mobile communication technology to allow users to receive digital broadcasting while on the move. More specifically, DMB services using mobile communication terminals are becoming more popular.

A limited frequency bandwidth is assigned to each terrestrial operators, i.e., broadcasting stations. Thus, the broadcasting stations collectively assign one audio channel, two video channels, and one data channel to their assigned frequency bandwidths to provide digital broadcasting services with various contents (e.g., sports, drama, and audio contents).

In a digital broadcasting service, by means of collective channel assignment, a bandwidth varies from content to content, while a user having a different preference from day-to-day is not considered.

### SUMMARY OF THE INVENTION

It is, therefore, an object of the present invention to provide a terrestrial digital broadcasting system and method, in which a user having different preferences for each day is considered.

According to one aspect of the present invention, there is provided a terrestrial digital broadcasting system including a broadcasting station and a digital broadcasting receiver. The broadcasting station provides a digital broadcasting service, changes broadcasting configuration information according to user preference, and transmits digital broadcasting program guide data having changed broadcasting configuration information. The digital broadcasting receiver receives the digital broadcasting program guide data having changed broadcasting configuration information, searches for a broadcasting channel according to a change in the broadcasting configuration information, and receives and outputs digital broadcasting on the found broadcasting channel.

According to another aspect of the present invention, there is provided a digital broadcasting reception method of a digital broadcasting receiver. The digital broadcasting reception method includes receiving digital broadcasting program guide data in a digital broadcasting mode, determining whether broadcasting service configuration information included in the received digital broadcasting program guide data is changed, searching for a broadcasting channel according to a change in the broadcasting service configuration information if the broadcasting service configuration information is changed, generating a digital broadcasting program list for the found broadcasting channel from the digital broadcasting program guide data and displaying the generated digital broadcasting program list, and if a predetermined channel is selected from the displayed digital broadcasting program list, receiving and outputting digital broadcasting data of the selected channel.

According to yet another aspect of the present invention, there is provided a digital broadcasting reception method of a digital broadcasting receiver. The digital broadcasting reception method includes if a user requests digital broadcasting, generating a digital broadcasting program list for each channel from previously stored digital broadcasting program guide data and displaying the generated digital broadcasting program list, if a predetermined channel is selected, determining whether broadcasting service configuration information is changed, if the broadcasting service configuration information is changed, updating the previously stored digital broadcasting program guide data, searching for a broadcasting channel according to a change in the broadcasting service configuration information, generating a digital broadcasting program list for the found broadcasting channel from the updated digital broadcasting program guide data, and displaying the generated digital broadcasting program list, and if a predetermined channel is selected, receiving digital broadcasting data of the selected channel and outputting the received digital broadcasting data.

### BRIEF DESCRIPTION OF THE DRAWINGS

The above and other objects, features, and advantages of preferred embodiments of the present invention will be more apparent from the following description taken in conjunction with the accompanying drawings, in which:
FIG. 1 illustrates a terrestrial digital broadcasting system according to an embodiment of the present invention;
FIG. 2 is a block diagram of a digital broadcasting receiver according to an embodiment of the present invention;
FIG. 3 is a flowchart illustrating an operation of a digital broadcasting receiver according to the present invention; and
FIG. 4 is a flowchart illustrating an operation of a digital broadcasting receiver according to another embodiment of the present invention.

### DETAILED DESCRIPTION OF THE PREFERRED EMBODIMENT

The matters defined in the description are provided to assist in a comprehensive understanding of preferred embodiments of the invention. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

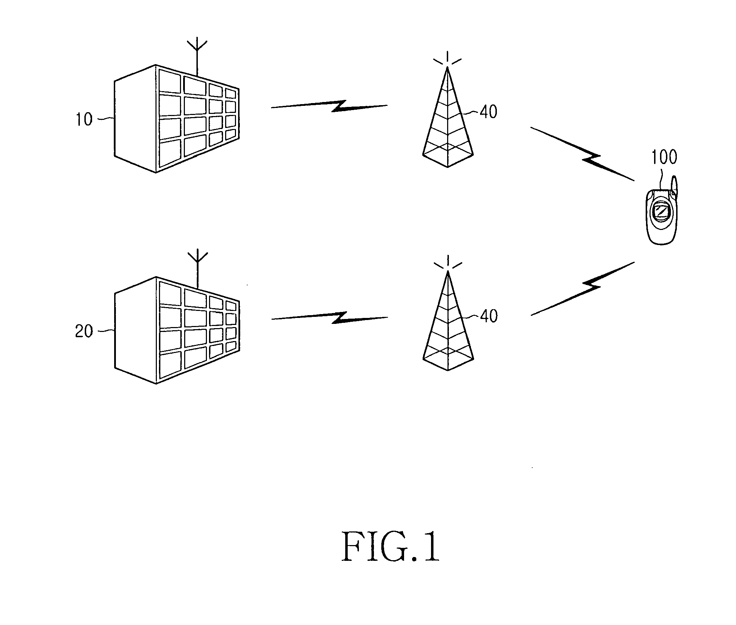

FIG. 1 illustrates a terrestrial digital broadcasting system according to the present invention.

The terrestrial digital broadcasting system includes broadcasting stations 10 and 20 for configuring multimedia data as digital broadcasting data to provide a digital broadcasting service and a digital broadcasting receiver 100 for receiving the digital broadcasting data to output the multimedia data. Digital broadcasting data broadcast by the terrestrial broadcasting stations 10 and 20 is transmitted to the digital broadcasting receiver 100 through repeaters 40. The broadcasting stations 10 and 20 change broadcasting service configuration information according to user preferences and transmit digital broadcasting program guide data to the digital broadcasting receiver 100 after incorporating the changed broadcasting service configuration information into the digital broadcasting program guide data. For example, if the user prefers content having a high data rate such as drama or sports content over news content during the weekend and prefers news or audio content over sports content during the week, the broadcasting stations 10 and 20 assign one sports channel and two drama channels for the weekend and assign one news channel and two audio channels for the week, thereby changing a broadcasting service configuration. The changed broadcasting service configuration information means information about the number of broadcasting channels for each day and contents provided for each channel. The contents may be sports, movies, music video, drama, news, audio, or data.

The broadcasting stations 10 and 20 incorporate the changed broadcasting service configuration information into the digital broadcasting program guide data as follows.

In the case of terrestrial digital broadcasting data, a transport frame includes three channels, i.e., a Synchronization Channel (SC), a Fast Information Channel (FIC), and a Main Service Channel (MSC).

The broadcasting stations 10 and 20 transmit digital broadcasting program guide data after incorporating the changed broadcasting service configuration information into Multiplex Configuration Information (MCI) and Service Information (SI) of the FIC. The structure of the terrestrial digital broadcasting transport frame is well known and a description thereof will not be given.

The digital broadcasting receiver 100 can include both a vehicle digital broadcasting receiver and a portable digital broadcasting receiver.

The digital broadcasting receiver 100 receives the digital broadcasting program guide data including the changed broadcasting service configuration information, searches for a broadcasting channel according to a change in the broadcasting service configuration information, and receives and outputs digital broadcasting serviced on the found broadcasting channel.

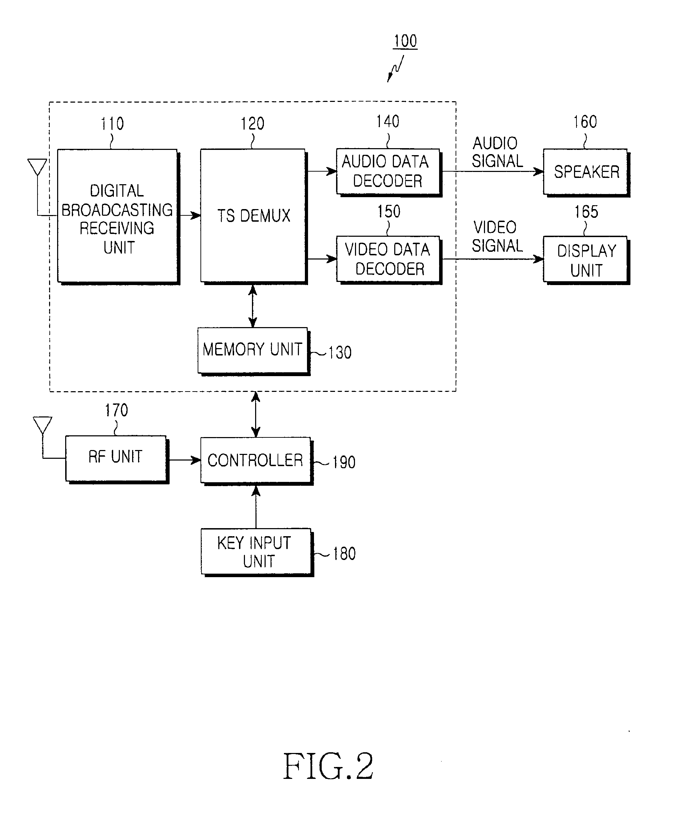

Hereinafter, the digital broadcasting receiver 100 of the terrestrial digital broadcasting system according to the present invention will be described, with reference to FIG. 2

The digital broadcasting receiver 100 includes a digital broadcasting receiving unit 110, a Transport Stream (TS) demultiplexer 120, a memory 130, an audio data decoder 140, a video data decoder 150, a speaker 160, a display unit 165, a Radio Frequency (RF) unit 170, a key input unit 180, and a controller 190. The display unit 165 and the speaker 160 serve as an output unit of the digital broadcasting receiver 100.

The digital broadcasting receiving unit 110 receives digital broadcasting data and digital broadcasting program guide data for a predetermined channel and transmits the same to the controller 190, under the control of the controller 190. The digital broadcasting program guide data may be received by the RF unit 170 from a separate server through the wireless Internet or received upon request from the user.

The TS demultiplexer 120 demultiplexes the received digital broadcasting data and divides the same into an audio data stream and a video data stream. The digital broadcasting data is demodulated by a demodulator (not shown) into a digital data stream.

The memory 130 stores various information required for controlling an operation of the digital broadcasting receiver 100. The memory 130 also stores the digital broadcasting program guide data received through the digital broadcasting receiving unit 110 under the control of the controller 190. The digital broadcasting program guide data may be updated at predetermined intervals under the control of the controller 190.

The audio data decoder 140 receives the audio data stream from the TS demultiplexer 120, decodes the same into an analog audio signal, and outputs the analog audio signal to the speaker 160.

The video data decoder 150 receives the video data stream from the TS demultiplexer 120, decodes the same into an analog video signal, and outputs the analog video signal to the display unit 165. The speaker 160 and the display unit 165 serve as an output unit of the digital broadcasting receiver 100.

The display unit 165 outputs display data generated in the digital broadcasting receiver 100 and may implemented with a Liquid Crystal Display (LCD) capable of supporting the resolution of the digital broadcasting. When the LCD is implemented with a touch screen, it may also serve as an input unit.

The RF unit 170 transmits and receives audio data, character data, video data, and control data under the control of the controller 190. The RF unit 170 includes an RF transmitter (not shown) for up-converting a frequency of a transmission signal and amplifying the up-converted transmission signal and an RF receiver (not shown) for low-noise-amplifying a received signal, and downconverting a frequency of the low-noise-amplified signal. Although not shown in FIG. 2, the RF unit 170 may include a modem having a transmitter for encoding and modulating a transmission signal and a receiver for demodulating and decoding a received signal.

The RF unit 170 may also receive digital broadcasting program guide data from a separate server.

The key input unit 180 receives a user input signal such as a key input or a voice input and transmits the same to the controller 190. The key input unit 180 may designate a key for requesting the output of digital broadcasting or a key for requesting digital broadcasting program guide data.

The controller 190 controls the overall operation of the digital broadcasting receiver 100. When the digital broadcasting receiver 100 is implemented with a mobile communication terminal, the controller 190 may be implemented with a Qualcomm MSM chip.

The controller 190 determines whether broadcasting service configuration information included in digital broadcasting program guide data received through the digital broadcasting receiver 110 in a digital broadcasting mode is changed. If the broadcasting service configuration information included in the received digital broadcasting program guide data is not identical to broadcasting service configuration information included in previously stored digital broadcasting program guide data, the controller 190 determines that the broadcasting service configuration information is changed. In this case, the controller 190 updates the digital broadcasting program guide data, which is previously stored in the memory 130, with the received digital broadcasting program guide data.

The digital broadcasting program guide data may be received from the broadcasting stations 10 and 20 through the digital broadcasting receiving unit 110 or the RF unit 170 whenever the broadcasting service configuration information is changed or upon request from the user.

If the broadcasting service configuration information is changed, the controller 190 scans a frequency band of broadcasting channels to search for a broadcasting channel according to a change in the broadcasting service configuration information.

The controller 190 generates a digital broadcasting program list for the found broadcasting channel from the updated digital broadcasting program guide data and displays the digital broadcasting program list on the display unit 165.

Upon selection of a predetermined channel from the displayed digital broadcasting program list, the controller 190 receives digital broadcasting data of the selected channel and outputs the digital broadcasting data through the speaker 160 and the display unit 165. At this time, upon selection of a predetermined channel from the displayed digital broadcasting program list, the controller 190 may read detailed information of a broadcasting program that is currently broadcast on the selected channel from the digital broadcasting program guide data and display the detailed information on the display unit 165.

If the user requests digital broadcasting when the digital broadcasting program guide data is not up-to-date, the controller 190 generates a digital broadcasting program list for each channel from previously stored digital broadcasting program guide data and displays the digital broadcasting program list on the display unit 165.

Upon selection of a predetermined channel, the controller 190 determines whether broadcasting service configuration information is changed, and if so, the controller updates the previously stored digital broadcasting program guide data.

The controller 190 searches for a broadcasting channel according to a change in the broadcasting service configuration information, generates a digital broadcasting program list for the found broadcasting channel from the updated digital broadcasting program guide data, and displays the generated digital broadcasting program list on the display unit 165.

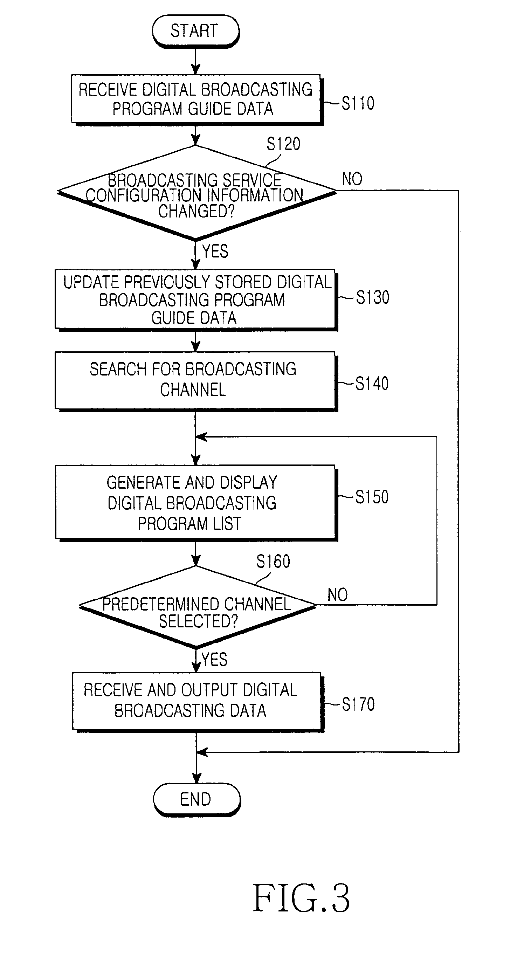

Referring to FIGs. 2 and 3, the controller 190 receives digital broadcasting program guide data through the digital broadcasting receiving unit 110 or the RF unit 170 in step S110. The digital broadcasting program guide data includes broadcasting service configuration information indicating the number of broadcasting channels for each day of the week and contents provided for each channel, and a broadcasting station may transmit the digital broadcasting program guide data whenever broadcasting service configuration information is changed. The controller 190 may receive the digital broadcasting program guide data through the wireless Internet or transmits a request for the digital broadcasting program guide data to a separate server (not shown) or a base station upon request from a user and store the received digital broadcasting program guide data in the memory 130.

The controller 190 determines whether broadcasting service configuration information of the received digital broadcasting program guide data is changed in step S120. At this time, the controller 190 may determine that the broadcasting service configuration information is changed if the broadcasting service configuration information of the received digital broadcasting program guide data is not identical to broadcasting service configuration information of digital broadcasting program guide data previously stored in the memory 130.

As described with reference to FIG. 1, the controller 190 may check MCI and SI of an FIC of a digital broadcasting transport frame for determination in step S120.

If it is determined that broadcasting service configuration information of the received digital broadcasting program guide data is changed, the controller 190 updates the digital broadcasting program guide data previously stored in the memory 130 with the received digital broadcasting program guide data in step S130.

The controller 190 searches for a broadcasting channel in a frequency band servicing digital broadcasting according to a change in the broadcasting service configuration information in step S 140.

The controller 190 generates a digital broadcasting program list for the found broadcasting channel from the updated digital broadcasting program guide data and displays the digital broadcasting program list on the display unit 165 in step S150. The controller 190 then checks if a predetermined channel is selected from the displayed digital broadcasting program list in step S160.

Upon selection from a predetermined channel, the controller 190 receives digital broadcasting data of the selected channel from the digital broadcasting receiving unit 110 and outputs the digital broadcasting data through the speaker 160 and the display unit 165 in step S 170. At this time, upon selection of a predetermined channel, the controller 190 may read detailed information of a broadcasting program that is currently broadcast on the selected channel from the updated digital broadcasting program guide data and display the detailed information. In this case, if a predetermined key (e.g., an OK key) is input from the user who checks the detailed information, the digital broadcasting data of the selected channel may be received from the digital broadcasting receiving unit 110 and output through the speaker 160 and the display unit 165.

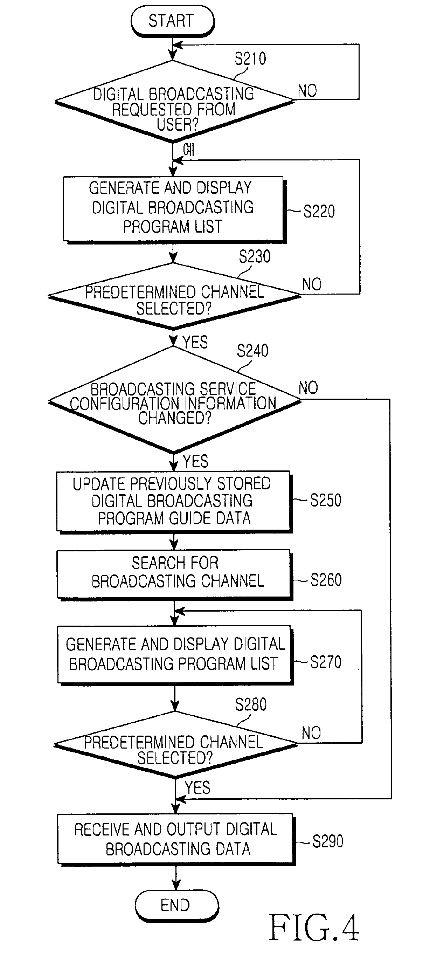

Referring to FIGs. 2 and 4, the controller 190 checks if a user requests digital broadcasting serviced through a specific frequency band in step S210. Here, the specific frequency band means a frequency band in which a predetermined broadcasting station provides digital broadcasting.

Upon request from the user, the controller 190 generates a digital broadcasting program list for each channel indicating digital broadcasting programs provided in the specific frequency band from digital broadcasting program guide data previously stored in the memory 130 and displays the digital broadcasting program list on the display unit 165 in step S220. The controller 190 than checks if a predetermined channel is selected from the displayed digital broadcasting program list in step S230.

Upon selection from a predetermined channel, the controller 190 determines whether broadcasting service configuration information is changed in step S240. At this time, the controller 190 makes a determination by checking if digital broadcasting program guide data received through the digital broadcasting receiving unit 110 or the RF unit 170 is identical to the previously stored digital broadcasting guide data. If the received digital broadcasting program guide data is not identical to the previously stored digital broadcasting program guide data, the controller 190 determines that the broadcasting service configuration information is changed.

If the broadcasting service configuration information is changed, the controller 190 updates the digital broadcasting program guide data previously stored in the memory 130 in step S250. At this time, the controller 190 may output a message indicating the change of the broadcasting service configuration information using a sound or characters.

After updating the digital broadcasting program guide data, the controller 190 scans a specific frequency band to search for a broadcasting channel in step S260.

The controller 190 generates a digital broadcasting program list for the found broadcasting channel from the updated digital broadcasting program guide data and displays the digital broadcasting program list on the display unit 165 in step S270.

The controller 190 then checks if a predetermined channel is selected in step S280, and if so, the controller 190 receives digital broadcasting data of the selected channel through the digital broadcasting receiving unit 110 and outputs the digital broadcasting data through the speaker 160 and the display unit 165 in step S290.

As described above, according to the present invention, a terrestrial digital broadcasting system and method in which various contents are dynamically provided for each day of the week according to user preferences is provided, thereby using a broadcasting channel efficiently having a limited frequency bandwidth.

While the present invention has been shown and described with reference to preferred embodiments thereof, it will be understood by those skilled in the art that various changes in form and details may be made therein without departing from the spirit and scope of the invention.

## Claims

1. A terrestrial digital broadcasting system comprising:
a broadcasting station for providing a digital broadcasting service, changing broadcasting configuration information according to user preferences, and transmitting digital broadcasting program guide data having the changed broadcasting configuration information; and
a digital broadcasting receiver for receiving the digital broadcasting program guide data having the changed broadcasting configuration information, searching for a broadcasting channel according to the change in the broadcasting configuration information, and receiving and outputting digital broadcasting on the found broadcasting channel.

2. The terrestrial digital broadcasting system of claim 1, wherein the broadcasting service configuration information includes the number of broadcasting channels for each day of the week and contents provided for each channel.

3. The terrestrial digital broadcasting system of claim 1, wherein the digital broadcasting receiver updates previously stored digital broadcasting program guide data if the digital broadcasting program guide data having the changed broadcasting configuration information is received.

4. The terrestrial digital broadcasting system of claim 1, wherein the digital broadcasting receiver generates a digital broadcasting program list for the found broadcasting channel from the received digital broadcasting program guide data and displays the generated digital broadcasting program list.

5. The terrestrial digital broadcasting system of claim 4, wherein if a predetermined channel is selected from the displayed digital broadcasting program list, the digital broadcasting receiver receives digital broadcasting data of the selected channel from the broadcasting station and outputs the received digital broadcasting data.

6. A digital broadcasting reception method of a digital broadcasting receiver comprising:
receiving digital broadcasting program guide data in a digital broadcasting mode;
determining whether broadcasting service configuration information included in the received digital broadcasting program guide data is changed;
searching for a broadcasting channel according to the change in the broadcasting service configuration information if the broadcasting service configuration information is changed;
generating a digital broadcasting program list for a found broadcasting channel from the digital broadcasting program guide data and displaying the generated digital broadcasting program list; and
if a predetermined channel is selected from the displayed digital broadcasting program list, receiving and outputting digital broadcasting data of the selected channel.

7. The digital broadcasting reception method of claim 6, wherein the broadcasting service configuration information includes the number of broadcasting channels for each day of the week and contents provided for each channel.

8. The digital broadcasting reception method of claim 6, wherein the digital broadcasting program guide data is received whenever the broadcasting service configuration information is changed.

9. The digital broadcasting reception method of claim 6, wherein the digital broadcasting program guide data is received upon request from a user.

10. The digital broadcasting reception method of claim 6, wherein the digital broadcasting program guide data is received through the wireless Internet.

11. The digital broadcasting reception method of claim 6, wherein the step of determining whether the broadcasting service configuration information is changed comprises determining that the broadcasting service configuration information is changed if the broadcasting service configuration information of the received digital broadcasting program guide data is not identical to broadcasting service configuration information of previously stored digital broadcasting program guide data.

12. The digital broadcasting reception method of claim 11, wherein the step of determining whether the broadcasting service configuration information is changed comprises updating previously stored digital broadcasting program guide data with the received digital broadcasting program guide data if it is determined that the broadcasting service configuration information is changed.

13. The digital broadcasting reception method of claim 6, wherein the step of outputting digital broadcasting data of the selected channel comprises if a predetermined channel is selected from the displayed digital broadcasting program list, reading detailed information of a broadcasting program that is currently broadcast on the selected channel from the digital broadcasting program guide data and displaying the detailed information.

14. A digital broadcasting reception method of a digital broadcasting receiver comprising:
if a user requests digital broadcasting, generating a digital broadcasting program list for each channel from previously stored digital broadcasting program guide data and displaying the generated digital broadcasting program list;
if a predetermined channel is selected, determining whether broadcasting service configuration information is changed;
if the broadcasting service configuration information is changed, updating the previously stored digital broadcasting program guide data;
searching for a broadcasting channel according to the change in the broadcasting service configuration information, generating a digital broadcasting program list for a found broadcasting channel from the updated digital broadcasting program guide data, and displaying the generated digital broadcasting program list; and
if a predetermined channel is selected, receiving digital broadcasting data of the selected channel and outputting the received digital broadcasting data.

15. The digital broadcasting reception method of claim 14, wherein the broadcasting service configuration information includes the number of broadcasting channels for each day of the week and contents provided for each channel.

16. The digital broadcasting reception method of claim 14, wherein the digital broadcasting program guide data is received whenever the broadcasting service configuration information is changed.

17. The digital broadcasting reception method of claim 14, wherein the digital broadcasting program guide data is received upon request from a user.

18. The digital broadcasting reception method of claim 14, wherein the digital broadcasting program guide data is received through the wireless Internet.

19. The digital broadcasting reception method of claim 14, wherein the step of determining whether the broadcasting service configuration information is changed comprises:
if a predetermined channel is selected, checking if the received digital broadcasting program guide data is identical to the previously stored digital broadcasting program guide data; and
if the received digital broadcasting program guide data is not identical to the previously stored digital broadcasting program guide data, determining that the broadcasting service configuration information is changed.

20. The digital broadcasting reception method of claim 19, further comprising outputting a message indicating that the broadcasting service configuration information is changed.

21. The digital broadcasting reception method of claim 14, wherein the step of outputting digital broadcasting data of the selected channel comprises, if a predetermined channel is selected from the displayed digital broadcasting program list, reading detailed information of a broadcasting program that is currently broadcast on the selected channel from the digital broadcasting program guide data and displaying the detailed information.
